Europäisches Patentamt

European Patent Office

Office européen des brevets

(11) Veröffentlichungsnummer: **0 429 934 A1**

## (12) EUROPÄISCHE PATENTANMELDUNG

(21) Anmeldenummer: 90121564.0

(22) Anmeldetag: **10.11.90**

(51) Int. Cl.⁵: **A01M 7/00**

(30) Priorität: **24.11.89 DE 3938867**

(43) Veröffentlichungstag der Anmeldung:
**05.06.91 Patentblatt 91/23**

(84) Benannte Vertragsstaaten:
**BE DE DK FR GB NL SE Patentblatt 8**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) **Landwirtschaftliche Verteilmaschine.**

(57) Landwirtschaftliche Verteilmaschine, wie beispielsweise Feldspritze, mit einem Verteilergestänge, welches sich beidseitig der Maschine quer zur Fahrtrichtung erstreckt und an einem Rahmenmittelteil um etwa in Fahrtrichtung verlaufende Achsen einhaltbar befestigt ist, wobei das Verteilergestänge aus zwei Verteilerarmen besteht, von denen sich der eine Verteilerarm zur einen Seite des Rahmenmittelteiles und der andere Verteilerarm zur anderen Seite des Rahmenmittelteiles erstreckt. Um für Verteilergestänge großer Arbeitsbreite auf einfache Weise eine sichere Pendelaufhängung des Gestänges in aufrechter Ebene zu schaffen und in allen Lagen eine Ausrichtung des Gestänges in Schlepperebene zu ermöglichen, ist vorgesehen, daß die Verteilerarme in ihrem oberen Bereich jeweils mittels eines Gelenkes (27) an dem Rahmenmittelteil (4) schwenkbar angeordnet sind, daß die Verteilerarme über eine in einem Abstand (A) zu den oberen Gelenken (27) angeordneten Stange (35) in ihrer Arbeitsstellung gehalten werden, und daß die Verteilerarme gegenläufig zueinander um die durch die oberen Gelenke (27) verlaufenen Schwenkachsen (29) in aufrechter Ebene auf und ab pendeln können.

FIG.8

# LANDWIRTSCHAFTLICHE VERTEILMASCHINE

Die Erfindung betrifft eine landwirtschaftliche Verteilmaschine, wie beispielsweise Feldspritze, mit einem Verteilergestänge, welches sich beidseitig der Maschine quer zur Fahrtrichtung erstreckt und an einem Rahmenmittelteil um etwa in Fahrtrichtung verlaufende Achsen einfaltbar befestigt ist, wobei das Verteilergestänge aus zwei Verteilerarmen besteht, von denen sich der eine Verteilerarm zur einen Seite des Rahmenmittelteiles und der andere Verteilerarm zur anderen Seite des Rahmensmittelteiles erstreckt.

Derartig ausgebildete landwirtschaftliche Verteilmaschinen sind in der landwirtschaftlichen Praxis bekannt. Um das Verteilergestänge vor Beschädigungen zu schützen, und um eine parallele Führung des Verteilergestänges gegenüber der Bodenoberfläche zu erreichen, sind die an dem Rahmenmittelteil angeordneten Verteilerarme pendelnd am Maschinenrahmen der Verteilmaschine angelenkt. Hierbei befindet sich der Drehpunkt, um dem das Rahmenmittelteil beweglich gegenüber dem Maschinenrahmen der Verteilmaschine gelagert ist, oberhalb des Schwerpunktes des Verteilergestänges. Hierdurch soll gewährleistet werden, daß sich das aus den beiden Verteilerarmen bestehende Verteilergestänge immer wieder parallel zur Bodenoberfläche ausrichtet. Weiterhin soll durch die pendelnde Aufhängung des Verteilergestänges erreicht werden, das die vom Zugfahrzeug der Verteilmaschine hervorgerufenen Stöße und Schwingungen sich nicht auf das Verteilergestänge übertragen, so daß das Verteilergestänge möglichst ruhig gegenüber der zu bearbeitenden Fläche geführt wird.

Da sich diese Pendelaufhängung nicht reibungslos ausbilden läßt, d. h., die Anordnung des Rahmenmittelteils auf dem Pendelzapfen des Maschinenrahmens läßt sich nicht reibungslos ausbilden, richtet sich das Verteilergestänge nicht immer wieder exakt parallel zur Bodenoberfläche aus. Desweiteren ist diese Pedelaufhängung zur Schwingungsdämpfung mit Dämpfungsfedern ausgerüstet. Bei einer Auslenkung des Verteilergestänges nimmt dieses dann sehr häufig eine Stellung ein, deren Winkellage sich zwischen der Bodenoberfläche und beispielsweise der Schräglage der die Verteilmaschine transportierenden Zugmaschine, beispielsweise beim Durchfahren einer Furche, einstellt. Verläßt die Zugmaschine nun beispielsweise diese Furche ist es möglich, daß sich das Verteilergestänge nicht wieder parallel zur Bodenoberfläche ausrichtet, sondern eine Schräglage beibehält. Dieser Effekt tritt besonders bei Verteilergestängen mit sehr großen Arbeitsbreiten auf. Das Verteilergestänge paßt sich also weder exakt dem Bodenniveau noch dem Zugmaschinenniveau an. Eine exakte Verteilergestängeführung gegenüber der zu bearbeitenden Fläche ist nicht möglich. Zur exakten Verteilergestängeführung muß bei den bekannten Verteilmaschinen zwischen den Rahmenmittelteil und dem Verteilergestänge eine Gegensteuerungsvorrichtung vorhanden sein, die sowohl beim Arbeiten am Hang als auch bei Schräglage der Zugmaschine gegenüber der bearbeitenden Fläche wirksam wird und eine Gestängeausrichtung vornehmen würde. Diese Gegensteuerungsvorrichtung ist sehr umständlich und aufwendig.

Der Erfindung liegt nun die Aufgabe zugrunde, für Verteilergestänge großer Arbeitsbreite auf einfache Weise eine sichere Pendelaufhängung des Gestänges in aufrechter Ebene zu schaffen und in allen Lagen eine Ausrichtung des Gestänges in Schlepperebene zu ermöglichen.

Diese Aufgabe wird in erfindungsgemäßer Weise dadurch gelöst, daß die Verteilerarme in ihrem oberen Bereich jeweils mittels eines Gelenkes an dem Rahmenmittelteil schwenkbar angeordnet sind, daß die Verteilerarme über eine in einem Abstand zu den oberen Gelenken angeordneten Stange in ihrer Arbeitsstellung gehalten werden, und daß die Verteilerarme gegenläufig zueinander um die durch die oberen Gelenke verlaufenden Schwenkachsen in aufrechter Ebene auf und ab pendeln können.

Infolge dieser Maßnahmen ergibt sich eine sichere Pendelaufhängung des Verteilergestänges, wobei das Pendelsystem so konzipiert ist, daß die Verteilerarme automatisch dem Schlepperniveau folgen, so daß sich ihre Lage stets über den Schlepper dem Gelände anpaßt. Eine Gegensteuerung des Verteilergestänges muß also nur noch erfolgen, wenn sich das Zugfahrzeug in einer Schräglage gegenüber der zu bearbeitenden Fläche befindet, ansonsten findet immer eine exakte Verteilergestängeausrichtung entsprechend dem Zugfahrzeugniveau statt, unabhängig, ob auf ebener Fläche oder in Hanglage gearbeitet wird.

Dadurch, daß die in einem Abstand zu den oberen Gelenken der Verteilerarme angeordnete Stange mittels Gelenke beweglich gegenüber den Verteilerarmen angeordnet ist, ergibt sich auf einfachste Weise eine pendelnde Aufhängung der beiden Verteilerarme gegenüber dem Rahmenmittelteil, ohne daß eine zentraler Pendelrahmen erforderlich ist. Hierdurch ergibt sich eine einfache und preiswerte Pendelaufhängung des Verteilergestänges.

Erfindungsgemäß ist die Stange an den unteren Enden aufrechter Streben, die mit ihrem oberen Ende gelenkig an dem Rahmenmittelteil befestigt sind, gelenkig angeordnet. Hierdurch wird erreicht, daß sowohl die Verteilerarme als auch die an den unteren Enden aufrechter Streben angeordnete Stange um die selben Schwenkachsen verschwenkbar sind. Hierdurch ergibt sich eine freie Pendelaufhängung der Verteilerarme gegenüber dem Rahmenmittelteil der Verteilmaschine, wobei durch die gelenkige Verbindung der Verteilerarme in ihrem unteren Bereich eine Verbindung zwischen den sich zu beiden Seiten des Rahmenmittelteils erstreckenden Verteilerarmen geschaffen wird, so daß beide Verteilerarme in annähernd gleicher Weise Pendelbewegungen um das Rahmenmittelteil ausführen können, so daß sich eine sichere Pendelaufhängung des Verteilergestänges ergibt und immer eine exakte Rückstellung des Verteilergestänges zum Schlepperniveau erfolgt.

Zur Gewährleistung einer sicheren Pendelaufhängung des Verteilergestänges ist es erforderlich, evtl. auftretende Fertigungstoleranzen hinsichtlich der Anlenkung der Verteilerarme an dem Rahmenmittelteil ausgleichen zu können. Hierzu ist erfindungsgemäß vorgesehen, daß die unteren Enden der inneren Teile der Verteilerarme in ihrer Arbeitsstellung mittels vorzugsweise einstellbarer Anschlagelemente gegen die Streben und/oder die Stange anliegen.

In besonders bevorzugter Weise ist erfindungsgemäß vorgesehen, daß der Abstand der oberen Gelenke, mittels derer die Verteilerarme an dem Rahmenmittelteil angelenkt sind, einen Abstand zueinander aufweisen, der kleiner ist als der Abstand, den die die Stange anlenkenden Gelenke zueinander aufweisen. Hierbei ist erfindungsgemäß vorgesehen, daß das aus zwei Verteilerarmen bestehende Verteilergestänge mittels einer trapezförmigen Viergelenkanordnung in aufrechter Ebene gegenläufig pendelnd an dem Rahmenmittelteil angeordnet ist. Hierdurch ergibt sich ein trapezförmig ausgebildetes Gelenkviereck zur Anlenkung der Verteilerarme an dem Rahmenmittelteil. Diese Art der Anlenkung ermöglicht auf einfachste Weise eine pendelnde Aufhängung der Verteilerarme an dem Rahmenmittelteil und bewirkt, daß sich die Verteilerarme sich automatisch immer exakt dem Schlepperniveau anpassen, welches der Schlepper gegenüber dem Gelände einnimmt.

Damit sich nun die Verteilerarme von der ausgestreckten Arbeitsstellung in eine Transportstellung überführen lassen, ist erfindungsgemäß vorgesehen, daß unterhalb der oberen Gelenke an den Verteilerarmen angreifende Hubmittel zum Einklappen der Verteilerarme in ihre Transportstellung angeordnet sind. Hierdurch werden die durch die oberen Gelenke verlaufenden Schwenkachsen, um welche die Verteilerarme in aufrechter Ebene auf und ab pendeln können, gleichzeitig als Schwenkachsen für die Überführung der Verteilerarme in eine Transportstellung genutzt. Hierbei ist das unterhalb der oberen Gelenke an den Verteilerarmen angreifende Hubmittel als Hydraulikzylinder ausgebildet, der über Gelenke zwischen den beiden Verteilerarmen angeordnet ist. Beide Verteilerarme lassen sich also mittels nur eines einzigen Hubzylinders in die Transportstellung überführen.

In einer weiteren erfindungsgemäßen Ausführungsform ist vorgesehen, daß zwischen dem Rahmenmittelteil und den Verteilerarmen jeweils als Zugfedern ausgebildete elastische Elemente angeordnet sind. Diese Zugfedern sind derart zwischen dem Rahmenmittelteil und den Verteilerarmen befestigt, daß sie beim Einklappen der einzelnen, die jeweiligen Verteilerarme bildenden Abschnitte derart vorgespannt werden und eine Gewichtsentlastung bewirken, so daß sie den zum Einklappen der Verteilerarme in die Transportstellung mit Hydrauliköl beaufschlagten Hydraulikzylinder unterstützen. Das heißt, das Vorspannen der Zugfedern dient zur Erleichterung des Einklappens der Verteilerarme in die Transportstellung.

Damit sich nun nicht alle Stöße und Schwingungen, die vom Zugfahrzeug des die Verteilmaschine transportierenden Zugfahrzeuges erzeugt werden, direkt auf die sich in Arbeitsstellung befindlichen Verteilerarme übertragen werden, ist erfindungsgemäß vorgesehen, daß zwischen der Stange und dem Rahmenmittelteil Dämpfungselemente angeordnet sind. Diese Dämpfungselemente dienen zum Dämpfen der auf die Verteilerarme wirkenden Stöße und Schwingungen, so daß die Verteilerarme ruhig gegenüber der Bodenoberfläche geführt werden. Gleichzeitig wird die Übertragung von Schwingungen vom linken auf den rechten Verteilerarm gedämpft. Erfolgt nun aus irgendwelchen Gründen eine Einklappung einzelner Verteilerarmabschnitte, so daß sich eine unsymmetrische Ausklappung der Verteilerarme gegenüber dem Rahmenmittelteil ergibt, kann das Pendelsystem arretiert werden, wenn eine Seite der Verteilerarme Übergewicht hat. Hierzu ist erfindungsgemäß vorgesehen, daß zwischen der Stange und dem Rahmenmittelteil Arretierungselemente zur Fixierung der Stange zum Arretieren des Verteilergestänges angeordnet sind. Somit wird gewährleistet, daß der einseitig vorragende, übergewichtige Teil der Verteilerarme nach wie vor die zum Spritzen oder Verteilen erforderliche richtige Lage gegenüber der Bodenoberfläche einnimmt.

Damit nun das Verteilergestänge auch Pendelbewegungen in Fahrtrichtung ausführen kann, ist erfindungsgemäß vorgesehen, daß eine Vorrichtung vorgesehen ist, die Pendelbewegungen der Verteilerarme in Fahrtrichtung aufnimmt. Hierbei besteht diese Vorrichtung dann aus einer die Verteilerarme im Bereich der oberen Gelenke der Verteilerarme verbindenden Stange, wobei diese Stange in einem Abstand, in Fahrtrichtung gesehen, vor den oberen Gelenken der Verteilerarmeanlenkung am Rahmenmittelteil angeordnet ist. Diese Stange ist mittels Gelenke beweglich gegenüber den Verteilerarmen zwischen den Verteilerarmen befestigt. Zur horizontalen Führung der die Verteilerarme verbindenden Stange ist die Stange an in Fahrtrichtung verlaufende, und mit dem Rahmenmittelteil verbundene Tragarme beweglich gelagert, so daß die Stange Bewegungen quer zur Fahrtrichtung ausführen kann. Damit nun die Verteilerarme möglichst ruhig auch in Fahrtrichtung geführt werden, ist erfindungsgemäß vorgesehen, daß die Verbindungsstelle zwischen den Tragarmen und der die Verteilerarme verbindenden Stange Feder- und Dämpfungselemente aufweist, die zur Absorbierung der auf die Verteilerarme in Fahrtrichtung hervorgerufenden Pendelbewegungen dienen.

Weitere Einzelheiten der Erfindung sind der Beispielschreibung und den Zeichnungen zu entnehmen. Hierbei zeigt

Fig. 1 die in erfindungsgemäßer Weise ausgebildete Feldspritze mit symetrisch zueinander ausgeklappten Verteilerarmen in der Ansicht von hinten,

Fig. 2 die Feldspritze gemäß Fig. 1 mit unsymetrisch zueinander ausgeklappten Verteilerarmen, wobei der äußere Abschnitt des aus vier einzelnen Abschnitten bestehenden rechten Verteilerarmes eingeklappt ist,

Fig. 3 die Feldspritze gemäß Fig. 1, wobei die beiden äußeren Verteilerarmabschnitte eingeklappt sind,

Fig. 4 die Feldspritze gemäß Fig. 1, wobei sich der rechte Verteilerarm des Verteilergestänges in Transportstellung befindet,

Fig. 5 die Feldspritze gemäß Fig. 1, wobei sich beide Verteilerarme in Transportstellung befinden,

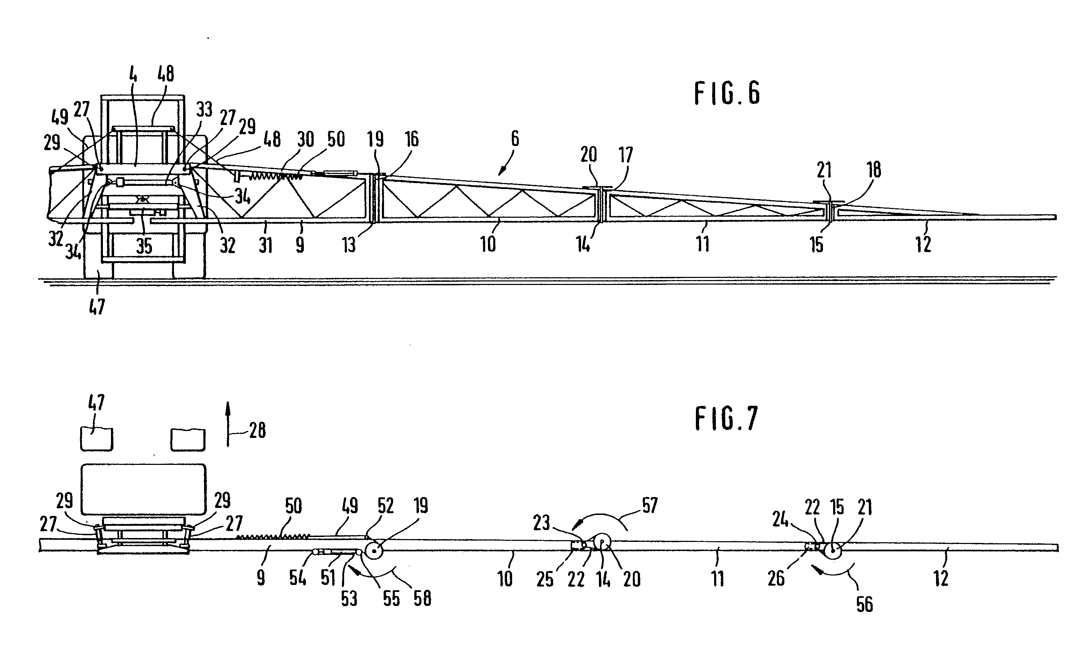

Fig. 6 der rechte Verteilerarm der Feldpritze gemäß Fig. 1 in vergrößertem Maßstab,

Fig. 7 der Verteilerarm gemäß Fig. 6 in der Draufsicht,

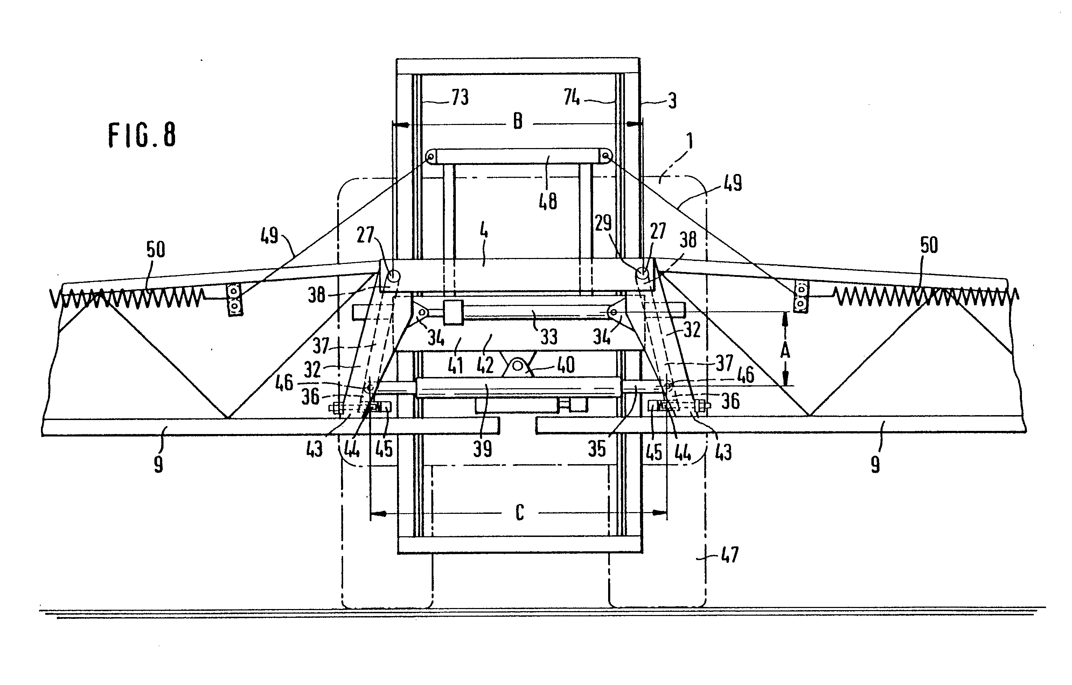

Fig. 8 die Darstellung des Mittelteiles der Feldspritze gemäß Fig. 1 und der teilweisen Darstellung der Verteilerarme,

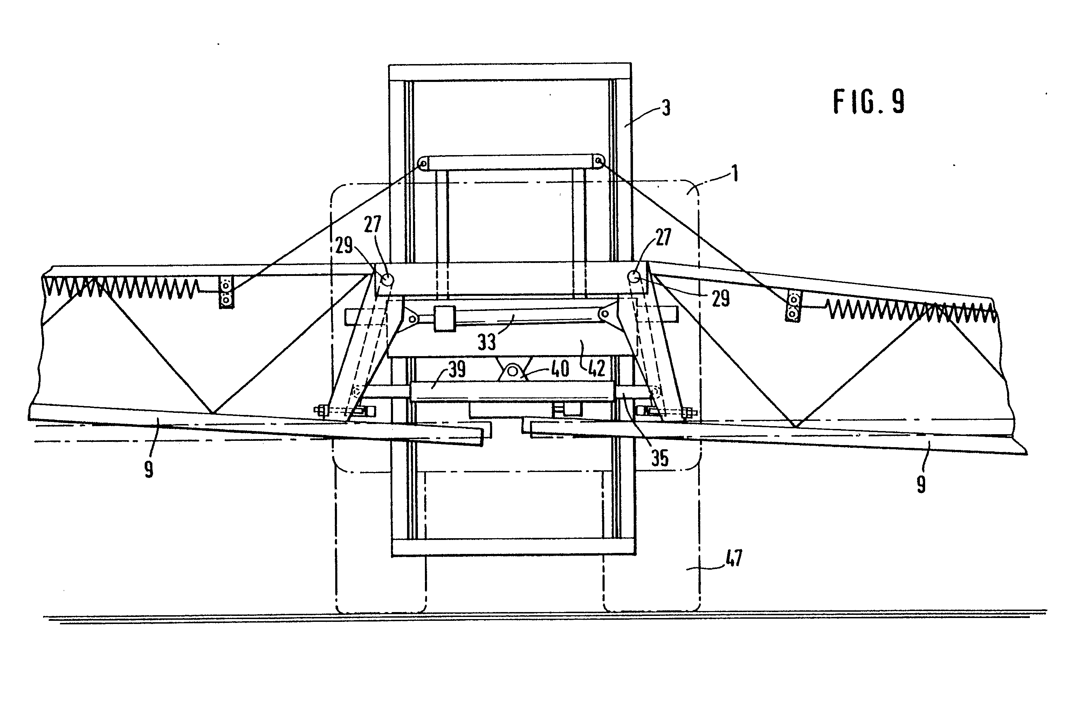

Fig. 9 die Feldspritze gemäß Fig. 8, mit der pendelnden Darstellung der Verteilerarme,

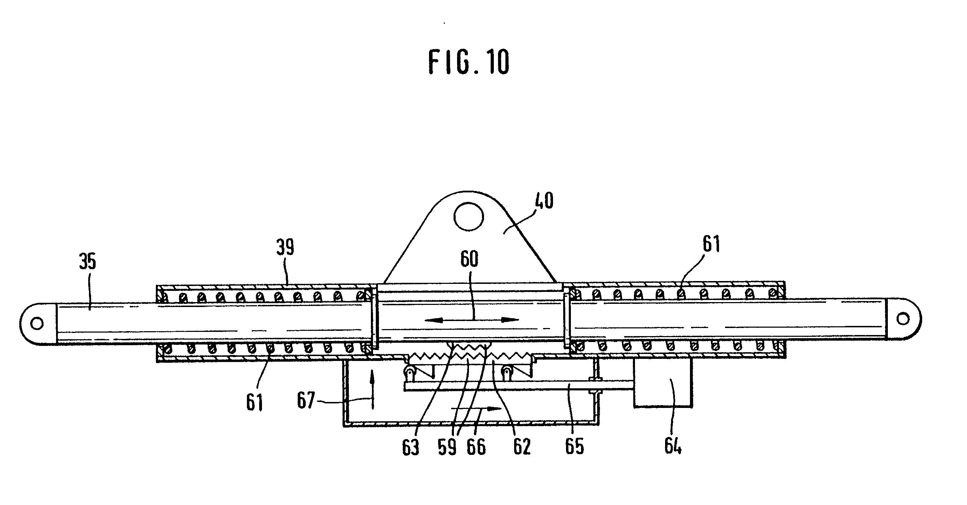

Fig. 10 die Darstellung der die Verteilerarme in Arbeitsstellung haltenden, in einem Abstand zu den oberen Anlenkpunkten der Verteilarme sich befindlichen Stange in Prinzipdarstellung und vergrößertem Maßstab und

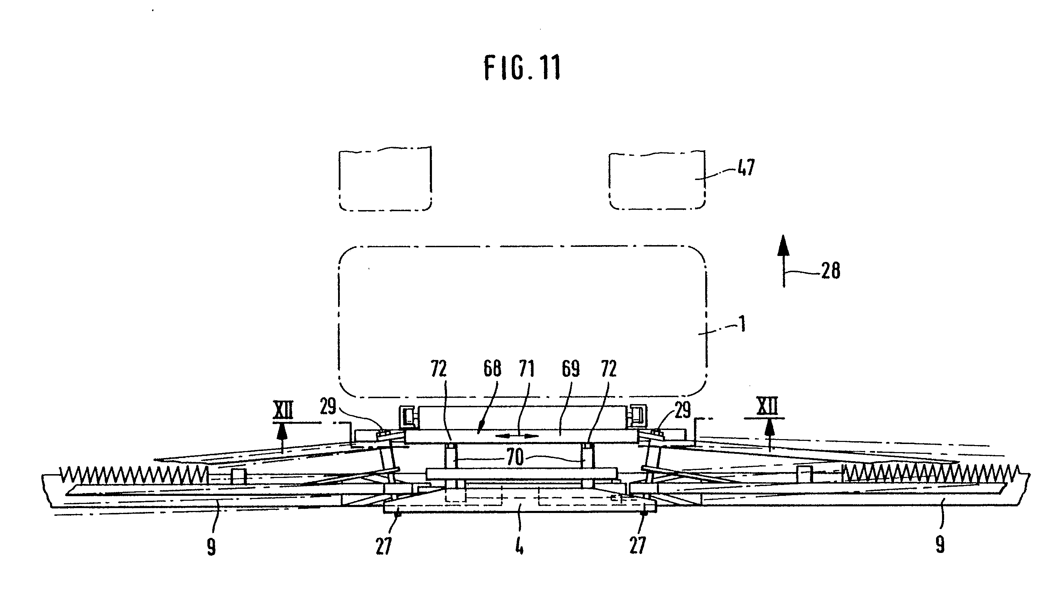

Fig. 11 die Feldspritze gemäß Fig. 8 in der Draufsicht,

Fig. 12 die Feldspritze gemäß Fig. 11 in der Ansicht XII -XII.

Die Feldspritze weist den Flüssigkeitsbehälter 1 auf, der von dem Maschinenrahmen 2 getragen wird. Der Maschinenrahmen 2 weist wiederum die aufrechte Schiebeführung 3 auf, in dem das Rahmenmittelteil 4 höhenbeweglich befestigt ist. An dem Rahmenmittelteil 4 ist jeweils rechts und links der Fahrzeuglängsachse 5 das aus den beiden Verteilerarmen 6 und 7 bestehende Verteilergestänge 8 befestigt. Die Verteilerarme 6 und 7 bestehen jeweils aus den einzelnen Abschnitten 9, 10, 11 und 12. Hierbei sind diese Abschnitte 9, 10, 11 und 12 jeweils mittels der die aufrechten Achsen 13, 14 und 15 aufweisende Gelenke 16, 17 und 18 verbunden. Auf den aufrechten Achsen 13, 14 und 15 dieser Gelenke 16, 17 und 18 befinden sich jeweils die Kettenräder 19, 20 und 21. Über die Kette 22 wirken die den beiden äußeren Auslegersbschnitten 11 und 12 zugeordneten Kettenräder 20 und 21 jeweils mit dem Antriebsritzel 23 bzw. 24 zusammen. Diese Antriebsritzel 23 und 24 sind auf den Ausgangswellen der in den Verteilerarmabschnitten 10 und 11 integrierten Elektromotore 25 und 26 angeordnet.

Der innerste Verteilerarmabschnitt 9 des Verteilerarmes 6 ist mittels des Gelenkes 27 direkt an dem Rahmenmittelteil 4 der Feldspritze angelenkt. Dieses Gelenk 27 weist die annähernd horizontale und annähernd in Fahrtrichtung 28 verlaufende Schwenkachse 29 auf. Die Verteilerarme 6 und 7 sind als Fachwerkkonstruktionen ausgebildet. Der innerste Abschnitt 9 des Verteilerarmes 6 weist das obere und untere Verteilerarmprofil 30 und 31 auf. Die beiden Verteilerarmprofile 30 und 31 die innersten Abschnitte 9 sind über die annähernd aufrecht verlaufende Verbindungsstrebe 32 miteinander verbunden. Zwischen dieser Verbindungsstrebe 32 und dem Maschinenmittelteil ist jeweils das Gelenk 27 angeordnet. Unterhalb der oberen Gelenke 27 ist der die beiden Verbindungsstreben 32 miteinander verbindende Hydraulikzylinder 33, in den an den Verbindungsstreben 32 angeschweißten Halterungen 34 befestigt. Im unteren Bereich der Verteilerarme 6 und 7 werden die Verteilerarme 6 und 7 über die in dem Abstand A zu den oberen Gelenken 27 angeordnete Stange 35 in ihrer Arbeitsstellung gehalten. Diese Stange 35 ist gelenkig an den unteren Enden 36 der aufrechten Streben 37 angelenkt. Die aufrechten Streben 37 sind in ihrem oberen Ende 38 gelenkig an dem Rahmenmittelteil 4 befestigt, in dem sie ebenfalls auf der annähernd in Fahrtrichtung 28 verlaufenden Schwenkachse 29 befestigt sind. Die Stange 35 ist also beweglich gegenüber den Verteilerarmen 6 und 7 am Maschinenrahmen befestigt. Hierbei bewegt sich die Stange 35 in dem Halterungsrohr 39, welches über die Halterung 40 verschwenkbar an dem Gehäuse 41 der zentralen Höhenverstelleinrichtung 42 angelenkt ist.

Die im unteren Bereich 43, der als inneres Teil ausgebildeten Verbindungsstrebe 32 der Verteilerarme 6 und 7, angeordneten einstellbaren Anschlagelemente 44 wirken mit den unteren Enden 45 der aufrechten Streben 37 zusammen. Mittels dieser einstellbaren Anschlagelemente 44 werden die Verteilerarme 6 und 7 in ihrer Arbeitsstellung gehalten, wobei die einstellbaren Anschlagelemente 44 zum Einstellen bzw. Ausgleichen von Fertigungstoleranzen bezüglich der waagerechten Lage der sich in Arbeitsstellung befindlichen Verteilerarme 6 und 7 dient.

Der Abstand der oberen Gelenke 27, mittels derer die Verteilerarme 6 und 7 an dem Rahmenmittelteil 4 angelenkt sind, weisen den Abstand B zueinander auf, der kleiner ist als der Abstand C, den die die Stange 35 anlenkenden Gelenke 46 zueinander aufweisen. Hierdurch ergibt sich die in aufrechter Ebene gegenläufig pendelnd an dem Rahmenmittelteil 4 angeordnete Anlenkung des aus den beiden Verteilerarmen 6 und 7 bestehenden Verteilergestänges 8 mittels einer trapezförmigen Viergelenkanordnung. Dadurch, daß der Abstand der oberen Gelenke 27 einen kleineren Abstand B aufweist als der Abstand der die Stange 35 anlenkenden Gelenke 46 wird erreicht, daß sich das Verteilergestänge 8 stets nach dem Schlepperniveau des die Feldspritze transportierenden Ackerschleppers 47 ausrichtet.

Zwischen dem am Rahmenmittelteil 4 angeordneten Traggerüst 48 und den beiden innersten Verteilerarmabschnitten 9 ist jeweils die als Seil ausgebildete Abspannvorrichtung 49 befestigt. Diese Abspannvorrichtung 49 weist die Zugfeder 50 auf und ist mit der zwischen dem innersten Verteilerarmabschnitt 9 und dem zweitinnersten Verteilerarmabschnitt 10 wirksamen, als Hydraulikzylinder 51 ausgebildeten Betätigungsvorrichtung zum Einfalten dieser beiden Abschnitte 9 und 10 verbunden. Hierbei wird das Seil der Abspannvorrichtung 49 zunächst um die Umlenkrolle 52 geführt, bevor die Abspannvorrichtung 49 um die mit der aufrechten Achse 13 des die beiden Abschnitte 9 und 10 verbindenden Gelenkes 16 befestigten, als Kettenrad 19 ausgebildeten Scheibe herumgeführt wird. Von hier erfolgt eine weitere Umlenkung der Abspannvorrichtung um die Umlenkrolle 53 bevor die Abspannvorrichtung 49 zu der an der Kolbenstange des Hydraulikzylinders 51 befestigen Umlenkrolle 54 gelangt. Hier erfolgt die letzte Umlenkung der Abspannvorrichtung 49, deren Ende 55 nun fest mit dem innersten Abschnitt 9 bzw. mit dem Hydraulikzylinder 51 verbunden wird.

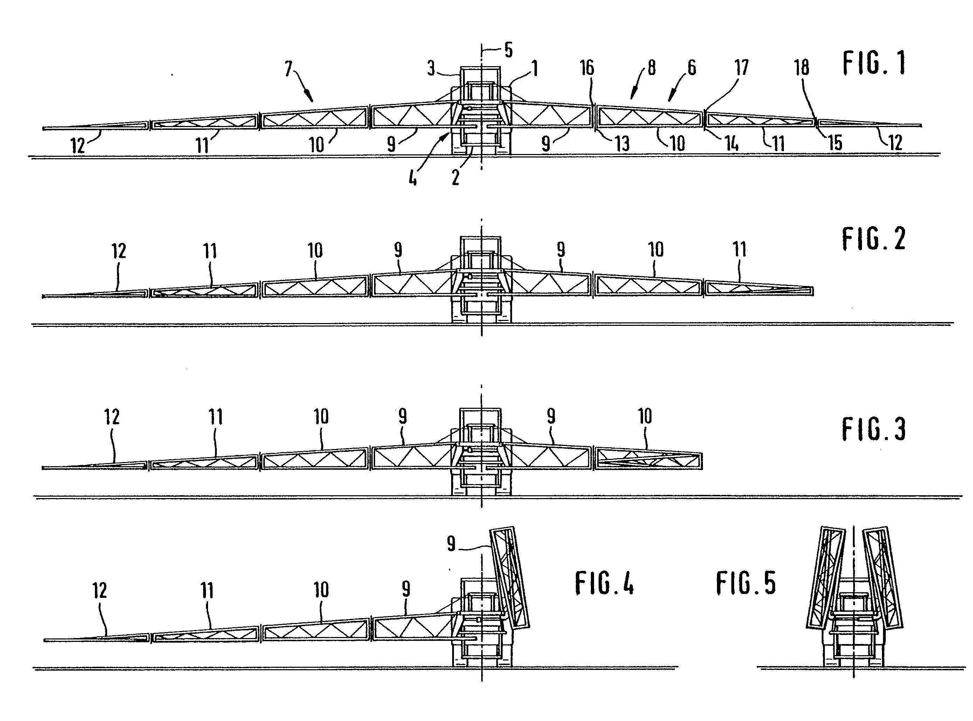

Die einzelnen Verteilerarmabschnitte 9, 10, 11 und 12 sind über zwischen diesen Abschnitten angeordnete, als elektrische Stellmotore 25 und 26 oder als hydraulische Stellmotore 33 und 51 ausgebildete Betätigungsvorrichtung gelenkig miteinander verbunden. Hierbei ist die Betätigungsvorrichtung zum Zusammenfalten des Verteilergestänges 8 zwischen dem innersten Abschnitt 9 und dem Rahmenmittelteil 4 sowie zwischen dem innersten Abschnitt 9 und dem diesem benachbarten Abschnitt 10 als Hydraulikzylinder 33 bzw. 51 ausgebildet, während die Betätigungsvorrichtung zwischen den übrigen Abschnitten 10 und 11 bzw. 11 und 12 jeweils die Elektromotore 25 bzw. 26 aufweist. Diese Betätigungsvorrichtungen 25, 26, 33 und 51 sind derart über eine Steuervorrichtung zu betätigen, daß beim Einklappen die Abschnitte 12, 11, 10 und 9 des Verteilergestänges 8 von außen nach innen nacheinander eingeklappt werden, während beim Ausklappen die Abschnitte 9, 10, 11 und 12 des Verteilergestänges 8 von innen nach außen nacheinander ausgeklappt werden. Hierdurch ist es möglich, daß sich die Verteilerarme 6 und 7 des Verteilergestänges 8 auch abschnittsweise Einklappen lassen. In Fig. 2 ist beispielsweise nur der äußere Abschnitt 12 des Verteilerarmes 6 eingeklappt. Eine Betätigung des Elektromotors 26 führt dazu, daß der Verteilerarmabschnitt 12 eine Schwenkbewegung um die aufrechte Achse 15 in Pfeilrichtung 56 ausführt. Die Fig. 3 zeigt das Verteilergestänge 8, bei dem die beiden äußeren Verteilerarmabschnitte 12 und 11 des Verteilerarmes 6 eingeklappt sind. Hierbei wird der Auslegerabschnitt 11 um die aufrechte Achse 14 in Pfeilrichtung 57 an den Auslegerabschnitt 10 herangeschwenkt, nachdem der Verteilerarmabschnitt 12 an den Verteilerarmabschnitt 11 entsprechend Fig. 2 herangeklappt ist.

Soll nun der entsprechend Fig. 3 eingeklappte Verteilerarm 6 weiter eingeklappt werden, wird der Hydraulikzylinder 51 mit Drucköl beaufschlagt. Die Beaufschlagung des Hydraulikzylinders 51 mit Drucköl bewirkt, daß die Kolbenstange dieses Hydraulikzylinders 51 ausfährt, was zu einer Spannung der Abspannvorrichtung 49 führt. Hierbei werden die entsprechend Fig. 3 eingeklappten Verteilerarmabschnitte 10, 11 und 12 um die aufrechte Achse 13 an den innersten Auslegerabschnitt 9 herangeschwenkt, da die translatorische Bewegung des Hydraulikzylinders 51 mittels des Kettenrades 19 in eine Drehbewegung umgewandelt wird, die dazu führt, daß die an den Verteilerarmabschnitten 10 herangeklappten Verteilerarmabschnitte 11 und 12 in Pfeilrichtung 58 verschwenkt werden. Gleichzeitig wird die Zugfeder 50 beim Heranfalten der Abschnitte 10, 11 und 12 den Abschnitt 9 derart vorgespannt, daß sich eine Gewichtsentlastung beim Einfalten der beiden innersten Verteilerarmabschnitte ergibt. Dieses führt dazu, daß sich die zu einem kompakten Paket zusammengefalteten Verteilerarme 6 und 7 unter geringem Kraftaufwand bei Beaufschlagung des Hydraulikzylinders 33 mit Drucköl um die annähernd in Fahrtrichtung verlaufende Schwenkachse 29 in die Transportstellung gemäß Fig. 4 überführen läßt.

Dieses Einfalten der Verteilergestänge 6 und 7 kann sowohl unabhängig voneinander als auch gemeinsam erfolgen. Beim gleichzeitigen Einfalten der Verteilerarme 6 und 7 erfolgt das Einklappen der einzelnen Verteilerarmabschnitte 9, 10, 11 und 12 in annähernd syncroner Weise. Werden beide zu einem kompakten Paket zusammengefalteten Verteilerarme 6 und 7 in die Transportstellung verschwenkt, nehmen die Verteilerarme 6 und 7 die Position gemäß Fig. 5 ein.

Zum Einklappen der Verteilerarme sei noch gesagt, daß beim Einklappen einzelner Vertilerarmabschnitte während des Spritzvorganges eine automatische Abschaltung der Zufuhr der Spritzmittel zu den Düsenleitungen der jeweils eingeklappten Verteilerarmabschnitte automatisch unterbrochen wird.

Damit die Verteilerarme 6 und 7 unabhängig voneinander, d.h. unsymetrisch zueinander ein- bzw. ausgefaltet werden können, sind zwischen der Stange 35 und dem Rahmenmittelteil 4 Arretierungselemente 59 zur Fixierung der Stange 35 und zum Arretieren des Verteilergestänges 8 vorgesehen. Die Verteilerarme 6 und 7 sind über die Stange 35 miteinander verbunden, wobei die Stange 35, in dem Halterungsrohr 39 in Pfeilrichtung 60 beweglich gelagert. Damit das Rahmenmittelteil 4 nicht all zu sehr durch das pendelnde Verteilergestänge 8 belastet wird, sind zwischen der Stange 35 und dem Rahmenmittelteil 4 die als Federn 61 ausgebildeten Dämpfungselemente angeordnet. Gleichzeitig sind die Verteilerarme 6 und 7 mittels dieser Federn 61 nachgiebig gegeneinander abgestützt. Diese Federn 61 befinden sich im Inneren des Halterungsrohres 39. Eine Bewegung der Stange 35 in Pfeilrichtung 60 muß also immer gegen die Federkraft der jeweiligen Feder 61 ausgeführt werden.

Da es durch das unsymetrische Ein- bzw. Ausklappen der Verteilerarme 6 und 7 zueinander zu unsymetrischen Gewichtsverhältnissen zwischen der rechten und linken Seite des Verteilergestänges 8 kommt, neigt das Gestänge dazu, daß sich der jeweils ganz oder mehr ausgeklappte Verteilerarm 7 derart schräg stellt, daß das äußere Ende des Verteilerarmes 7 evtl. auf die Bodenoberfläche aufschlagen könnte. Aus diesem Grunde besitzt die die beiden Verteilerarme 6 und 7 verbindende Stange 35 die Arretierungselemente 59. Diese Arretierungselemente 59 sind einmal im Halterungsrohr 39 angeordnet, welches über die Halterung 40 mit dem Rahmenmittelteil 4 verbunden ist und zum anderen ist das Arretierungselement 59 auf der Stange 35 befestigt. Diese Arretierungselemente 59 sind als Zahnstangen 62 und 63 ausgebildet. Sollen nun die Verteilerarme 6 und 7 unsymmetrisch zueinander ein- bzw. ausgefaltet werden, erfolgt eine Arretierung der Stange 35 in der Weise, daß sie keine Relativbewegung in Pfeilrichtung 60 gegenüber dem Rahmenmittelteil 4 mehr ausführen kann. Hierzu wird der Zugmagnet 64 mit Strom beaufschlagt, so daß die Zugstange 65 sich in Pfeilrichtung 66 bewegt. Hierbei wird die in dem Halterrungsrohr 39 angeordnete Zugstange 62 des Arretierungselementes 59 derart in Pfeilrichtung 67 bewegt, daß sie mit der Zahnstange 62 der Stange 35 zusammenwirkt. Hierdurch wird gewährleistet, daß sich das Verteilergestänge nicht durch unsymetrische Gewichtsverhältnisse der unsymetrisch zueinander ein- bzw. ausgeklappten Verteilerarme 6 und 7 einstellen kann. Es ist aber auch möglich, mittels dieser Stange 35 und den Arretierungselementen 59 eine gewünschte Schrägstellung der Verteilerarme 6 und 7 gegenüber dem Rahmenmittelteil 4 herbeizuführen.

Damit das Verteilergestänge 8 nun auch Pendelbewegungen in Fahrtrichtung ausführen kann, ist die Vorrichtung 68 vorgesehen. Diese Vorrichtung 68 besteht aus der die Verteilerarme 6 und 7 im Bereich der oberen Gelenke 27 der Verteilerarme 6 und 7 verbindenden Stange 69. Diese Stange 69 ist in Fahrtrichtung 28 gesehen in einem Abstand zu den oberen Gelenken 27 der Verteilerarmanlenkung am Rahmenmittelteil 4 angeordnet. Die Stange 69 ist mittels in Fahrtrichtung verlaufende, und mit dem Rahmenmittelteil 4 verbundene Tragarme 70 in Pfeilrichtung 71 beweglich gelagert, so daß die Stange 69 Bewegungen quer zur Fahrtrichtung 28 ausführen kann. Damit nun die Pendelbewegungen des Verteilergestänges 8 in Fahrtrichtung gedämpft werden, sind zwischen der jeweiligen Verbindungsstelle 72 zwischen den Tragarmen 70 und der die Verteilerarme 6 und 7 verbindenden Stange 69 nicht näher dargestellte Feder- und Dämpfungselemente vorgesehen.

Die Fig. 12 zeigt die als Parallelzwangsführung ausgebildete Höhenverstelleinrichtung 42 für das Verteilergestänge 8. Diese Höhenverstelleinrichtung 42 besteht aus den sich kreuzenden Ketten 73 und 74. Die Ketten 73 und 74 sind mit ihrem Ende 75 an dem oberen Ende der Schiebeführung 3 und mit ihrem anderen Ende 77 am unteren Ende 78 der Schiebeführung 3 befestigt. Am Mittelteil 4 des Verteilergestänges 8 sind im waagerechten Abstand zueinander jeweils die drehfest miteinander verbundenen und drehbar gelagerten Kettenräder 79 und 80 angeordnet. Die drehfest miteinander verbundenen und hintereinander angeordneten, als Doppelkettenrad ausgebildeten Kettenräder 79 weisen die gleiche Größe auf. Die ebenfalls hintereinander und drehfest miteinander verbundenen Kettenräder 80 weisen einen kleineren Durchmesser als die Kettenräder 79 auf, und sind ebenfalls als Doppelkettenräder ausgebildet. Die Ketten 73 und 74 sind unter Kreuzung um diese Kettenräder 79 und 80 herumgeführt. An den Kettenrädern 79 greift die Antriebsverbindung 81 an. Diese Antriebsverbindung 81 ist als mit dem Doppelkettenrad 79 drehfest verbundenes Zahnrad ausgebildet, welches mit der Zahnstange 82 des Hydraulikzylinders 83 zusammenwirkt. Je nach Bewegungsrichtung des Hydraulikzylinders 83 bewegt sich die Höhenverstelleinrichtung 42 entlang der Schiebeführung 3 nach oben oder unten.

## Ansprüche

1. Landwirtschaftliche Verteilmaschine, wie beispielsweise Feldspritze, mit einem Verteilergestänge, welches sich beidseitig der Maschine quer zur Fahrtrichtung erstreckt und an einem Rahmenmittelteil um etwa in Fahrtrichtung verlaufende Achsen einhaltbar befestigt ist, wobei das Verteilergestänge aus zwei Verteilerarmen besteht, von denen sich der eine Verteilerarm zur einen Seite des Rahmenmittelteiles und der andere Verteilerarm zur anderen Seite des Rahmenmittelteiles erstreckt, dadurch gekennzeichnet, daß die Verteilerarme (6, 7) in ihrem oberen Bereich jeweils mittels eines Gelenkes (27) an dem Arbeitsstellung gehalten werden, und daß die Verteilerarme (6, 7) gegenläufig zueinander um die durch die oberen Gelenke (27) verlaufenen Schwenkachsen (29) in aufrechter Ebene auf und ab pendeln können.

2. Verteilmaschine nach Anspruch 1, dadurch gekennzeichnet, daß die Stange (35) mittels Gelenke (46) beweglich gegenüber den Verteilerarmen (6, 7) angeordnet ist.

3. Verteilmaschine nach einem oder mehreren der vorstehenden Ansprüchen, dadurch gekennzeichnet, daß die Stange (35) an den unteren Enden (36) aufrechter Streben (37) , die mit ihrem oberen Ende (38) gelenkig an dem Rahmenmittelteil (4) befestigt sind, gelenkig angeordnet ist.

4. Verteilmaschine nach einem oder mehreren der vorstehenden Ansprüche, dadurch gekennzeichnet, daß die unteren Enden (43) der inneren Teile der Verteilerarme (6, 7) in ihrer Arbeitsstellung mittels vorzugsweise einstellbarer Anschlagelemente (44) gegen die Streben (37) und/oder die Stange (35) anliegen.

5. Verteilmaschine nach einem oder mehreren der vorstehenden Ansprüche, dadurch gekennzeichnet, daß der Abstand (B) der oberen Gelenke (27), mittels derer die Verteilerarme (6, 7) an dem Rahmenmittelteil (4) angelenkt sind, einen Abstand (B) zueinander aufweisen, der kleiner ist als der Abstand (C), den die die Stange (35) anlenkenden Gelenke (46) zueinander aufweisen.

6. Verteilmaschine nach einem oder mehreren der vorstehenden Ansprüche, dadurch gekennzeichnet, daß unterhalb der oberen Gelenke (27) an den Verteilerarmen (6, 7) angreifende Hubmittel (33) zum Einklappen der Verteilerarme (6, 7) in ihre Transportstellung angeordnet sind.

7. Verteilmaschine nach einem oder mehreren der vorstehenden Ansprüche, dadurch gekennzeichnet, daß das Hubmittel (33) ein Hydraulikzylinder ist, der über Gelenke (34) zwischen den beiden Verteilerarmen (6, 7) angeordnet ist.

8. Verteilmaschine nach einem oder mehreren der vorstehenden Ansprüche, dadurch gekennzeichnet, daß das aus zwei Verteilerarmen (6, 7) bestehende Verteilergestänge (8) mittels einer trapezförmigen Viergelenkanordnung in aufrechter Ebene gegenläufig pendelnd an dem Rahmenmittelteil (4) angordnet ist.

9. Verteilmaschine nach einem oder mehreren der vorstehenden Ansprüche, dadurch gekennzeichnet, daß zwischen den Rahmenmittelteil (4) und den Verteilerarmen (6, 7) jeweils als Zugfedern (50) ausgebildete elastische Elemente angeordnet sind.

10. Verteilmaschine nach einem oder mehreren der vorstehenden Ansprüche, dadurch gekennzeichnet, daß zwischen der Stange (35) und dem Rahmenmittelteil (4) Dämpfungselemente (61) angeordnet sind.

11. Verteilmaschine nach einem oder mehreren der vorstehenden Ansprüche, dadurch gekennzeichnet, daß zwischen der Stange (35) und dem Rahmenmittelteil (4) Arretierungselemente (50) zur Fixierung der Stange (35) und zum Arretieren des Verteilergestänges (8) angeordnet sind.

12. Verteilmaschine nach einem oder mehreren der vorstehenden Ansprüche, dadurch gekennzeichnet, daß eine Vorrichtung (68) vorgesehen ist, die Pendelbewegungen der Verteilarme (6, 7) in Fahrtrichtung (28) aufnimmt.

13. Verteilmaschine nach einem oder mehreren der vorstehenden Ansprüche, dadurch gekennzeichnet, daß diese Vorrichtung (68) aus einer die Verteilerarme (6, 7) im Bereich der oberen Gelenke (27) der Verteilerarme (6, 7) verbindenden Stange (69) besteht, daß diese Stange (69) in einem Abstand in Fahrtrichtung (28) gesehen zur den oberen Gelenken (27) der Verteilerarmeanlenkung am Rahmenmittelteil (4) angeordnet ist.

14. Verteilmaschine nach einem oder mehreren der vorstehenden Ansprüche, dadurch gekennzeichnet, daß die Stange (69) an in Fahrtrichtung (28) verlaufende, und mit dem Rahmenmittelteil (4) verbundene Tragarme (70) beweglich gelagert ist, und daß die Stange (69) Bewegungen quer zur Fahrtrichtung (28) ausführen kann.

15. Verteilmaschine nach einem oder mehreren der vorstehenden Ansprüche, dadurch gekennzeichnet, daß die Verbindungsstellen (72) zwischen den Tragarmen (70) und der die Verteilerarme (6, 7) verbundende Stange (69) Feder- und Dämpfungselemente aufweise.

FIG.1

FIG.2

FIG.3

FIG.4

FIG.5

FIG.6

FIG.7

EP 0 429 934 A1

FIG.8

FIG. 9

EP 0 429 934 A1

FIG. 10

FIG.11

EP 0 429 934 A1

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2450041 (ETS. EVRARD)<br>* Seite 2, Zeilen 9 - 24; Figur *<br>--- | 1 | A01M7/00 |
| A | POWER FARMING<br>vol. 64, no. 8, August 1985, Sutton, Surrey, GB<br>Seiten 49 - 51;<br>"Precision spread from a stable boom"<br>* Seite 51, obere linke Figur *<br>--- | 1 | |
| A | DE-A-3712843 (AMAZONEN-WERKE H. DREYER GMBH & CO KG)<br>* Figuren 1, 2 *<br>--- | 1 | |
| A | DE-A-3127103 (H. DAMMAN)<br>* Figuren *<br>----- | 1 | |

| RECHERCHIERTE SACHGEBIETE (Int. Cl.5) |
|---|
| A01B<br>A01C<br>A01M |

Der vorliegende Recherchenbericht wurde für alle Patentansprüche erstellt

| Recherchenort | Abschlußdatum der Recherche | Prüfer |
|---|---|---|
| BERLIN | 04 MAERZ 1991 | MERCKX A. |

EPO FORM 1503 03.82 (P0403)